# EUROPEAN PATENT APPLICATION

(11) **EP 3 467 624 A1**
(43) Date of publication of application: **10.04.2019**
(21) Application number: 18207390.8
(22) Date of filing: 11.03.2010
(51) Int. Cl.: G06F 3/01

(54) **SYSTEM AND METHOD FOR INTERFACES FEATURING SURFACE-BASED HAPTIC EFFECTS**

(30) Priority: 12.03.2009 US 15948209 P; 17.11.2009 US 26204109 P; 17.11.2009 US 26203809 P; 29.01.2010 US 69689310; 29.01.2010 US 69690010; 29.01.2010 US 69690810; 29.01.2010 US 69701010; 29.01.2010 US 69703710; 29.01.2010 US 69704210
(62) Divisional of application: 10712200.4
(71) Applicant: Immersion Corporation, San Jose, CA 95134 (US)
(72) Inventor: CRUZ-HERNANDEZ, Juan Manuel, Montreal, Québec H3Z 1T1 (CA); MODARRES, Ali, San Jose, Québec H3H 1V8 (CA); GRANT, Danny A, Laval, Québec H7M 2A1 (CA); GOSLINE, Andrew, Montreal, Québec H2L 4J1 (CA)
(74) Representative: Phillips & Leigh LLP

(57) **Abstract**

Systems and methods for

identifying text displayed in a display area associated with a touch surface responsive to a search query;

highlighting the identified text displayed in the display area;

determining a haptic effect to generate based on identifying a position of a touch and the highlighted identified text, wherein the haptic effect is configured to adjust a coefficient of friction of the touch surface; and

outputting a haptic signal associated with the haptic effect to a haptic output device, the haptic output device configured to output the haptic effect while the touch is occurring.

## Description

### Cross-Reference to Related Applications

This patent application claims priority to U.S. Provisional Patent Application No. 61/159,482, entitled "Locating Features Using a Friction Display," filed March 12, 2009, which is incorporated by reference herein in its entirety.

This patent application claims priority to U.S. Provisional Patent Application No. 61/262,041, entitled "System and Method for Increasing Haptic Bandwidth in an Electronic Device" filed November 17, 2009, which is incorporated by reference herein in its entirety.

This patent application claims priority to U.S. Provisional Patent Application No. 61/262,038, entitled "Friction Rotary Device for Haptic Feedback" filed November 17, 2009, which is incorporated by reference herein in its entirety.

This patent application claims priority to U.S. Utility Patent Application No. 12/696,893, entitled "Systems And Methods For Providing Features In A Friction Display" filed January 29, 2010, which is incorporated by reference herein in its entirety.

This patent application claims priority to U.S. Utility Patent Application No. 12/696,900, entitled "Systems And Methods For Friction Displays And Additional Haptic Effects" filed January 29, 2010, which is incorporated by reference herein in its entirety.

This patent application claims priority to U.S. Utility Patent Application No. 12/696,908, entitled "Systems And Methods For Interfaces Featuring Surface-Based Haptic Effects" filed January 29, 2010, which is incorporated by reference herein in its entirety.

This patent application claims priority to U.S. Utility Patent Application No. 12/697,010, entitled "Systems And Methods For A Texture Engine" filed January 29, 2010, which is incorporated by reference herein in its entirety.

This patent application claims priority to U.S. Utility Patent Application No. 12/697,037, entitled "Systems And Methods For Using Textures In Graphical User Interface Widgets" filed January 29, 2010, which is incorporated by reference herein in its entirety.

This patent application claims priority to U.S. Utility Patent Application No. 12/697,042, entitled "Systems And Methods For Using Multiple Actuators To Realize Textures" filed January 29, 2010, which is incorporated by reference herein in its entirety.

### Background

Touch-enabled devices have been increasingly popular. For instance, mobile and other devices may be configured with touch-sensitive displays so that a user can provide input by touching portions of the touch-sensitive display. As another example, a touch-enabled surface separate from a display may be used for input, such as a trackpad, mouse, or other device.

For example, a user may touch a portion of the display or surface that is mapped to an on-screen graphical user interface (GUI), such as a button or control. As another example, a gesture may be provided, such as a sequence of one or more touches, drags across the surface, or other recognizable patterns sensed by the device. Although touch-enabled displays and other touch-based interfaces have greatly enhanced device functionality, drawbacks remain. For instance, even if a keyboard is displayed on a screen, a user accustomed to a physical keyboard may not have the same experience while using the touch-enabled device.

### Summary

Embodiments of the present invention can provide a touch-enabled device featuring surface-based haptic effects including, but not limited to, changes in texture, changes in a coefficient of friction of the touch surface, and/or simulation of boundaries or obstacles on the touch surface. Through the use of such features, devices may be more user friendly and may provide an overall more compelling user experience.

In one embodiment, a system comprises a sensor configured to detect a touch in a touch area when an object contacts a touch surface, the touch area mapped to a display area of a graphical user interface. The touch surface may correspond to the display area or may correspond to a non-display surface of a computing device or peripheral interfaced to a computing device.

The system can further include an actuator in communication with the processor and coupled to the touch surface, the actuator configured to output a haptic effect. The system can include one or more processors in communication with actuator and sensor, the processor configured to select a haptic effect to generate based on identifying a position of the touch and at least one of (a) recognizing an input gesture provided by the touch or (b) content displayed in the graphical user interface at a location in the display area mapped to a position in the touch area at or near the touch. The processor can command the actuator to generate the selected haptic effect while the touch is occurring to thereby provide a texture, simulate an obstacle or boundary, and/or provide an adjusted coefficient of friction of the display. These effects may be achieved using one or more actuators to provide haptic effects (including, but not limited to, vibrotactile effects) and/or using actuators that change the coefficient of friction of the display in a controlled manner.

These illustrative embodiments are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1A shows an illustrative system for providing surface-based haptic effects.
Figure 1B shows an external view of one embodiment of the system shown in Figure 1A.
Figure 1C illustrates another embodiment of the system shown in Figure 1A.
Figure 2 is a diagram illustrating an array of pixels 200 which can be used in some embodiments to select a haptic effect.
Figure 3 is a flowchart showing an illustrative method for providing an interface with surface-based haptic effects
Figure 4A is a diagram illustrating an external view of a system comprising a computing device that features a touch-enabled display.
Figure 4B shows a cross-sectional view of the device of Figure 4A.
Figures 4C-4D provides an example of a graphical user interface in the device of Figure 4A as the processor is configured to select a haptic effect in response to recognizing a page turn input gesture.
Figures 5A-5B each illustrate a system comprising a computing device featuring a touch surface and interfaced to a separate display.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used on another embodiment to yield a still further embodiment. Thus, it is intended that this disclosure include modifications and variations as come within the scope of the appended claims and their equivalents.

### Illustrative Example of a Device Using a Variable Friction Interface

One illustrative embodiment of the present invention comprises a computing system such as an iPod® portable music device or iPhone® mobile device, both available from Apple Inc. of Cupertino, California, or a Zune(R) portable device, available from Microsoft Corporation of Redmond, Washington. The computing system can include and/or may be in communication with one or more sensors, such as an accelerometer, as well as sensors (e.g., optical, resistive, or capacitive) for determining a location of a touch relative to a display area corresponding in this example to the screen of the device.

As the user interacts with the device, one or more actuators are used to provide tactile effects. For example, as a user moves a finger across the device, the coefficient of friction of the screen can be varied based on the position, velocity, and/or acceleration of the finger. Depending on how the friction is varied, the user may perceive a feature and/or a texture. As a particular example, the friction may be varied so that the user perceives a bump, border, or other obstacle corresponding to an edge of an on-screen button. As will be discussed in further detail below, varying the coefficient of friction can be used in any number of ways to provide feedback to a user.

### Illustrative Systems for Providing Surface-Based Haptic Effects

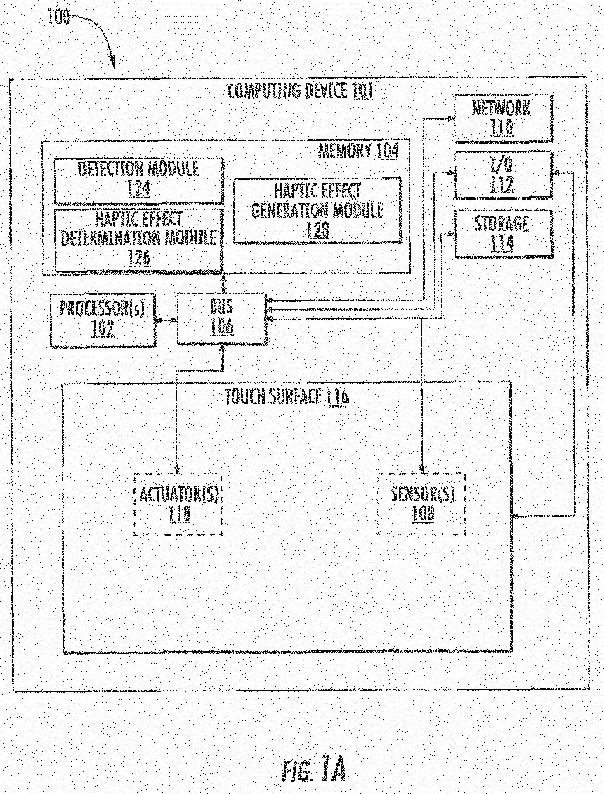

Figure 1A shows an illustrative system 100 for providing a surface-based haptic effect. Particularly, in this example, system 100 comprises a computing device 101 featuring a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, and additional storage 114.

Network device(s) 110 can represent any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate connection to devices such as a one or more displays, keyboards, mice, speakers, microphones, and/or other hardware used to input data or output data. Storage 114 represents nonvolatile storage such as magnetic, optical, or other storage media included in device 101.

System 100 further includes a touch surface 116, which is in this example integrated into device 101. Touch surface 116 represents any surface that is configured to sense tactile input of a user. One or more sensors 108 are configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors may be used to determine the touch position.

In this example, an actuator 118 in communication with processor 102 is coupled to touch surface 116. In some embodiments, actuator 118 is configured to output a haptic effect varying a coefficient of friction of the touch surface in response to a haptic signal. Additionally or alternatively, actuator 118 may provide haptic effects that move the touch surface in a controlled manner. Some haptic effects may utilize an actuator coupled to a housing of the device, and some haptic effects may use multiple actuators in sequence and/or in concert. For example, the coefficient of friction can be varied by vibrating the surface at different frequencies. Different combinations/sequences of variance can be used to simulate the feeling of a texture.

Although a single actuator 118 is shown here, embodiments may use multiple actuators of the same or different type to vary the coefficient of friction of the touch surface. For example, a piezoelectric actuator is used in some embodiments to displace some or all of touch surface 116 vertically and/or horizontally at ultrasonic frequencies. In some embodiments, multiple actuators such as eccentric rotating mass motors and linear resonant actuators can be used alone or in concert to provide different textures, friction variances, and other haptic effects. Other examples of actuators include electroactive polymers, shape memory alloys, electrostatic, and magnetostrictive actuators.

Turning to memory 104, exemplary program components 124, 126, and 128 are depicted to illustrate how a device can be configured in some embodiments to provide a variable-friction display. In this example, a detection module 124 configures processor 102 to monitor touch surface 116 via sensor(s) 108 to determine a position of a touch. For example, module 124 may sample sensor 108 in order to track the presence or absence of a touch and, if a touch is present, to track the location, path, velocity, acceleration, pressure and/or other characteristics of the touch over time.

Haptic effect determination module 126 represents a program component that analyzes data regarding touch characteristics to select a haptic effect to generate. For example, in some embodiments, an input gesture comprising a sequence of one or more touches may be recognized and correlated to one or more haptic effects. As another example, some or all of the area of touch surface 116 may be mapped to a graphical user interface. Different haptic effects may be selected based on the location of a touch in order to simulate the presence of a feature by varying the friction of touch surface 116 so that the feature is "felt" when a corresponding representation of the feature is seen in the interface. However, haptic effects may be provided via touch surface 116 even if a corresponding element is not displayed in the interface (e.g., a haptic effect may be provided if a boundary in the interface is crossed, even if the boundary is not displayed).

Haptic effect generation module 128 represents programming that causes processor 102 to generate and transmit a haptic signal to actuator(s) 118 to generate the selected haptic effect at least when a touch is occurring. For example, generation module 128 may access stored waveforms or commands to send to actuator 118. As another example, haptic effect generation module 128 may receive a desired coefficient of friction and utilize signal processing algorithms to generate an appropriate signal to send to actuator(s) 118. As a further example, a desired texture may be indicated along with target coordinates for the texture and an appropriate waveform sent to one or more vibrotactile actuators to generate appropriate displacement of the surface (and/or other device components) to provide the texture.

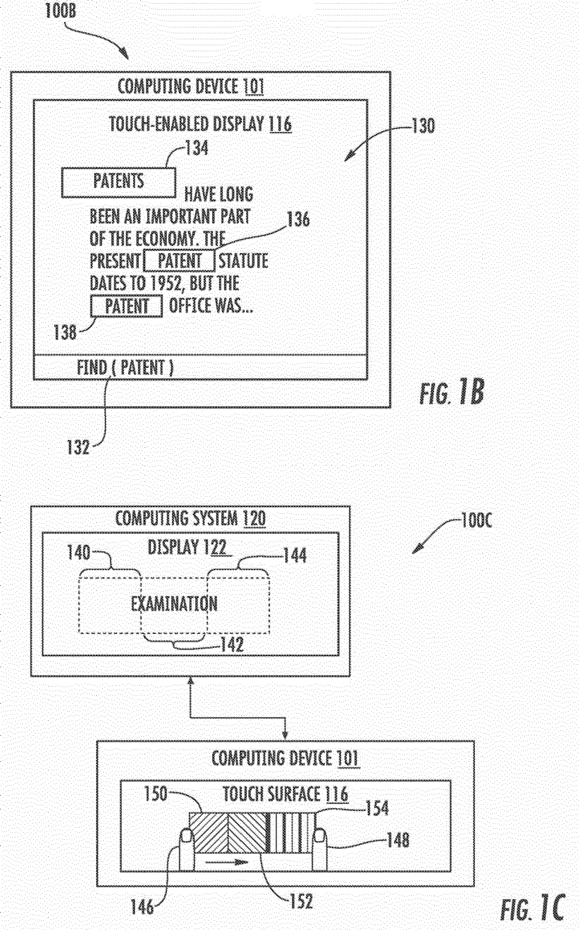

A touch surface may or may not overlay (or otherwise correspond to) a display, depending on the particular configuration of a computing system. In Figure 1B, an external view of a computing system 100B is shown. Computing device 101 includes a touch-enabled display 116 that combines a touch surface and a display of the device. The touch surface may correspond to the display exterior or one or more layers of material above the actual display components.

In this example, a haptic effect is selected based on the content of text displayed in a graphical user interface 130. Particularly, as indicated by interface element 132, a "find" command has been used to trigger a search query. A haptic effect can be selected to generate a haptic effect at positions in the touch area mapped to positions in the user interface corresponding to the searched content. In this example, the touch surface is mapped directly to the display area, and so when the searched content (the word "patent") is located, it is highlighted in interface 130 as shown at 134, 136, and 138.

In accordance with aspects of the present subject matter, the processor(s) of device 101 can select an appropriate haptic effect so that when a user touches screen 116 at or near 134, 136, and/or 138, the coefficient of friction of the screen is varied. For instance, this may allow a user to "skim" the text using his or her fingers, with the text of interest tactilely highlighted by having a higher (or lower) coefficient of friction or a texture distinct from other displayed content. More complex effects may also be created; for instance, a border or texture around the highlighted words can be generated using one or more actuators of device 101.

As was noted above, a touch surface need not overlay a display. Figure 1C illustrates another example of a touch-enabled computing system 100C. In this example, a computing device 101 features a touch surface 116 which is mapped to a graphical user interface provided in a display 122 that is included in computing system 120 interfaced to device 101. For example, computing device 101 may comprise a mouse, trackpad, or other device, while system 120 may comprise a desktop or laptop computer, set-top box (e.g., DVD player, DVR, cable television box), or another computing system. As another example, touch surface 116 and display 122 may be included in the same device, such as a touch-enabled trackpad in a laptop computer featuring display 122.

Whether integrated with a display or otherwise, the depiction of 2-D rectangular touch surfaces in the examples herein is not meant to be limiting. Other embodiments include curved or irregular touch-enabled surfaces that are further configured to provide surface-based haptic effects.

Returning to Figure 1C, in this example the user interface features textual content (the word "Examination") in the process of being selected in response to a user gesture input via touch surface 116. Particularly, first portion 140 is highlighted based on movement of finger 146 through area 150 of touch surface 116. As the word is selected, finger 146 will move to the position shown at 148, while in the graphical user interface, portions 142 and 144 of the word are highlighted.

A haptic effect can be provided in response to the gesture and/or based on the content of the word. For instance, as indicated by the different cross-hatching of areas 150, 152, and 154, the coefficient of friction of surface 116 can be changed as the word is highlighted. In some embodiments, content of selected text or other items is used to determine the haptic effect.

For instance, the friction may vary based on a "height map" of the selected text, with short letters ("e", "r") having a low height and taller letters (such as "1", "f') having a higher height. A frequency transform can be used to find the frequency content of the word; alternatively, a distance between the letter could be used to determine a "feel" for the word. As another example, the friction may be adjusted based simply on the selection, such as an increase in friction as the end of a word, phrase, or other unit is reached; this may help the user avoid selecting undesired portions of adjacent content. Boundaries between words can, of course, be recognized by identifying spaces, while grammar analysis (e.g., analyzing context, usage) as is known in the art can be used to recognize phrases.

In this example, textual selection was described based on left-to-right highlighting. Surface-based textual effects may be associated with other types of selection actions. For example, a user may draw a box by touching at an origin point and then dragging outward with a second object, with the two points representing opposite corners of a bounding box. A haptic effect such as a varying friction or texture can be provided while the selection is in progress and/or after selection is completed. Additionally or alternatively, while the area is selected, the portion of the touch area corresponding to the selected area may have a distinct texture or coefficient of friction. As another example, the selected area may be indicated haptically by a border or perimeter (e.g., a haptic click, pop, or friction variance to identify when a touch crosses into or out of the selected area).

### Illustrative Methods for Determining Haptic Effects to Provide

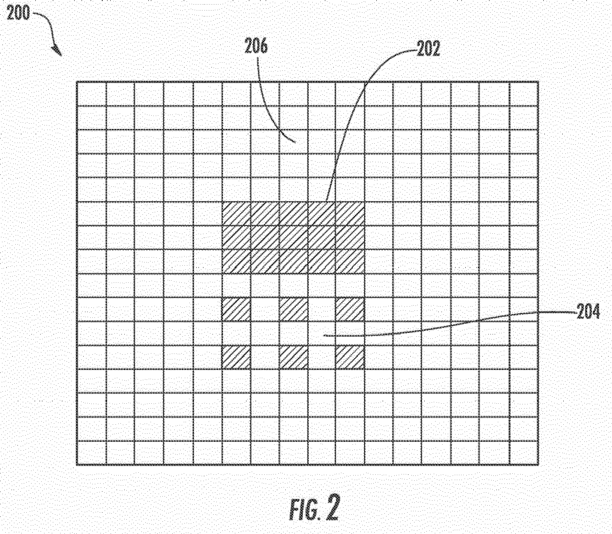

Figure 2 is a diagram illustrating an array of pixels 200 which can be used in some embodiments to select a haptic effect to provide based on mapping a detected touch to one or more pixel locations. Array 200 may, for instance, comprise a bitmap or other image file having one or more values associated with each pixel, with the value(s) used to determine how haptic effects are to be provided. This example shows a relatively small number of pixels; in practice, the array may comprise thousands or millions of pixels.

In some embodiments, a position of a touch within a touch area defined by the touch surface can be returned and then converted to one or more pixel addresses. The value or values associated with the pixel address(es) can be accessed and used to drive the actuator(s) of the haptic device (including the variable friction device or devices). For instance, each pixel address may be associated with an intensity value that is correlated to an amplitude with which a piezoelectric actuator is to be driven. As a more complex example, each pixel address may be associated with three intensity values (i.e., RGB). Each of the three intensity values can be associated with a different actuator intensity in some embodiments. As another example, some values may specify intensity and others specify duration of operation. As a further example, different pixel intensity values may be correlated to different desired textures or components used to drive actuators to simulate a single texture. Still further, a multilayer RGB image file may be used, with each layer corresponding to a particular actuator.

In this example, a first plurality of pixels 202 are associated with intensity values and form a "block," while a second plurality of pixels 204 form a different pattern. The different patterns may result in different effects based on how an object encounters the patterns. For instance, an object moving from top to bottom may encounter a first change in friction caused by pattern 202 and then a different variance caused by pattern 204; the same patterns encountered in reverse order (i.e., bottom to top) may simulate a different feel entirely.

The mapping between the touch surface and graphical user interface may be absolute or may be scaled. For example, in some embodiments, a touch location is directly correlated to a corresponding pixel address (or pixel addresses), with the associated values used in selecting haptic effects to drive the actuator(s). In other embodiments, the touch location and velocity is considered. For example, the actual touch address may be above pattern 202 but may be associated with a vector indicating motion towards pattern 202, and thus the values of pixels in pattern 202 are used to drive the actuators in time for the haptic effect to be played appropriately.

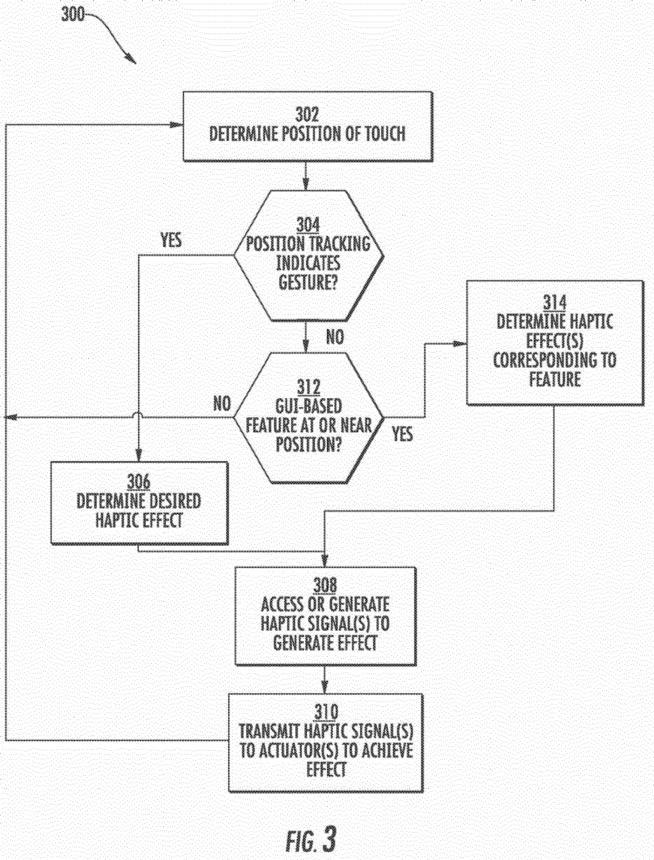

Figure 3 is a flowchart showing an illustrative method 300 for providing an interface with surface-based haptic effects. Block 302 represents determining a position of a touch in a touch area. For example, a processor may utilize one or more sensors embedded in or viewing a touch-enabled display or surface to track a position of a touch on the surface. Based on the current and/or past position of the touch, an interaction with a graphical user interface mapped to the touch area can be determined. Based on the interaction, one or more haptic effects can be selected, such as varying the friction of the touch surface and/or other effects.

In this example, the interaction is recognized at block 304 and 312, where the method determines first, at 304, whether a gesture is indicated. A gesture can be recognized as a sequence of one or more touches or patterns of touch, such as based on a direction and length of a swipe across the screen, a sequence of discrete touches in a pattern, or another recognizable interaction. In this example, if a gesture is recognized, flow moves to block 306, which represents determining a desired haptic effect associated with the gesture.

For example, a "Z"-shaped touch trajectory may be recognized as a type of input gesture based on pattern recognition carried out by a processor of the device while the gesture is in progress. One or more haptic effects may be associated with the "Z"-gesture in data accessible to the processor indicating an effect to output while the gesture is in progress and/or after the gesture is complete. For example, the data may provide for the surface to take on a texture or a change in friction as the gesture nears completion. Additionally or alternatively, a texture or coefficient of friction of the display may change after the gesture is recognized in order to confirm input of the gesture.

If at block 304 a gesture is not recognized, flow moves to block 312, in which the method evaluates whether a GUI-based feature is present at or near the position of the touch. As discussed herein, various features can be present in a graphical user interface mapped to the touch surface, and the features can be associated with haptic effects. The features may or may not correspond to content actually displayed in the graphical user interface. Block 312 represents determining if one or more of such features are at the touched location or near the touched location and block 314 represents determining one or more haptic effects corresponding to the feature.

For example, the current pixel location and/or a projected pixel location for the touch based on a velocity of the touch can be compared to a bitmap specifying haptic effects for various pixel positions. Based on the haptic effect(s), suitable haptic signals can be accessed/generated to provide the output specified in the bitmap.

As another example, a current or projected location of a touch can be compared to data identifying the location of GUI features such as controls, textual content, boundaries, and the like. Then, if a GUI feature is identified at the location, data associating one or more haptic effects to the feature can be accessed. For instance, a processor may track the location of a touch and determine the touch is at or approaching a position in the touch area mapped to a particular control (e.g., a button) in the graphical user interface. The processor can then consult a listing of interface elements to determine a haptic effect (e.g., a texture, a friction variation) associated with the button and, based on the haptic effect, take further actions to generate the haptic effect.

In this example, both blocks 306 and 314 lead to block 308, which represents accessing or generating one or more haptic signals to generate the selected haptic effect(s). For example, a processor may access drive signals stored in memory and associated with particular haptic effects. As another example, a signal may be generated by accessing a stored algorithm and inputting parameters associated with an effect. For example, an algorithm may output data for use in generating a drive signal based on amplitude and frequency parameters. As another example, a haptic signal may comprise data sent to an actuator to be decoded by the actuator. For instance, the actuator may itself respond to commands specifying parameters such as amplitude and frequency.

Block 310 represents transmitting the haptic signal to the actuator(s) to generate the desired effect(s). For instance, if an analog drive signal is to be provided, a processor can utilize an onboard D/A converter to create the signal. If a digital command is provided to the actuator, an appropriate message can be generated by an I/O bus of the processor. The haptic effect may be felt at the point of the touch and/or elsewhere. For example, if a two-finger input gesture is provided, the texture/coefficient of friction at the first finger may be changed in response to recognizing movement of the second finger.

In some embodiments, a baseline haptic signal may be sent to the actuator(s) to generate an ambient haptic effect even in the absence of a selected haptic effect in order to enhance the range of potential effects the device can produce. Thus, transmitting a haptic signal may comprise sending a "stop" command, a "zero" or minimal signal, or another signal to the actuator to reduce intensity as appropriate.

As an example, use of certain actuators, such as piezoelectric actuators, may allow for reduction in the coefficient of friction of a touch surface but not an increase in the coefficient of friction. To provide a range of options, a baseline signal may be provided so that the "ordinary" friction level of the touch surface is below the coefficient of friction the touch surface would have when static. Accordingly, haptic effects may be defined with respect to the baseline, rather than static, value. If maximum friction is desired, a "zero" signal may be sent to the piezoelectric actuator to stop movement of the surface.

Surface-based haptic effects may take any suitable form. For example, some haptic effects may comprise variations in the friction of the touch surface-some portions may be rendered "slicker" or "rougher" than others. As another example, vibrotactile effects may be used, such as vibrations or series of vibrations. Vibrotactile effects and/or variations in friction may be used to simulate the feeling of distinct features, such as boundaries or obstacles. For example, a boundary or edge may be simulated by an increase in friction, with the friction decreasing if the boundary is crossed (in some instances).

Vibrotactile effects and/or variations in friction may additionally or alternatively be used to simulate various textures. Additional detail regarding generation and use of textures can be found in U.S. Patent Application Nos. 12/697,010, 12/697,042, and 12/697,037, referenced above and entitled "Systems and Methods for a Texture Engine," (Attorney Docket IMM354 (51851-383720)), "Systems and Methods for Using Multiple Actuators to Realize Textures," (Attorney Docket No. IMM355 (51851-383719)), and "Systems and Methods for Using Textures in Graphical User Interface Widgets," (Attorney Docket No. IMM356 (51851-383718)), respectively. For instance, patterns of differing friction or patterns of vibration may be provided to mimic the feeling of textures such as brick, rocks, sand, grass, fur, various fabric types, water, molasses, and other fluids, leather, wood, ice, lizard skin, metals, and other texture patterns. Other textures not analogous to real-world textures may also be used, such as high-magnitude vibrotactile or other feedback when a "danger" texture is desired.

Although in this example blocks 304 and 312 were considered in the alternative, in some embodiments a method can consider whether a gesture is in progress while also evaluating whether the touch is occurring at a location mapped to a portion of a GUI having one or more tactile features.

### Additional Illustrative Embodiments of Interface Behavior

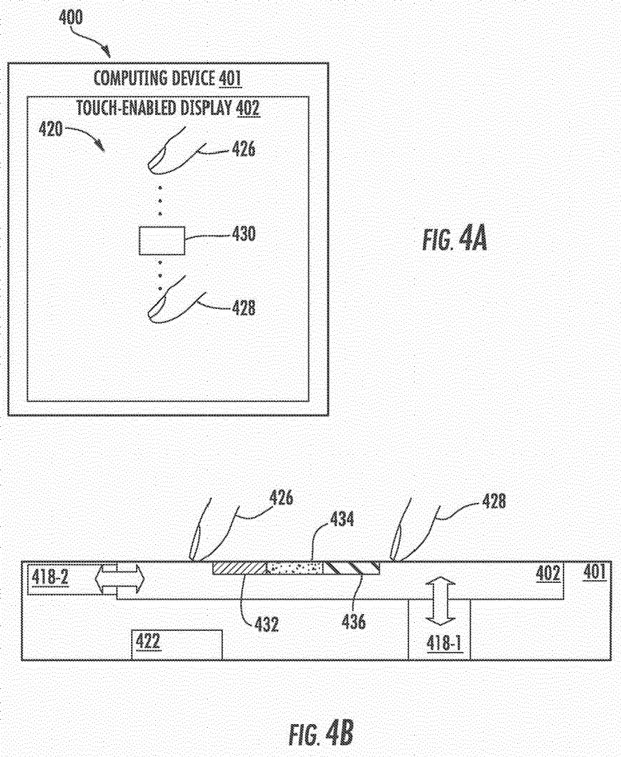

Figure 4A is a diagram illustrating an external view of a system 400 comprising a computing device 401 that features a touch-enabled display 402. Figure 4B shows a cross-sectional view of device 401. Device 401 may be configured similarly to device 101 of Figure 1A, though components such as the processor, memory, sensors, and the like are not shown in this view for purposes of clarity.

As can be seen in Figure 4B, device 401 features a plurality of actuators 418 and an additional actuator 422. Actuator 418-1 may comprise an actuator configured to impart vertical force to display 402, while 418-2 may move display 402 laterally. In this example, the actuators are coupled directly to the display, but it should be understood that the actuators could be coupled to another touch surface, such as a layer of material on top of display 402. Additional actuator 422 may be coupled to a housing containing the components of device 401. In the examples of Figures 4A-4D, the area of display 402 corresponds to the touch area, though the principles could be applied to a touch surface completely separate from the display.

In one embodiment, actuators 418 each comprise a piezoelectric actuator, while additional actuator 422 comprises an eccentric rotating mass motor, a linear resonant actuator, or another piezoelectric actuator. Actuator 422 can be configured to provide a vibrotactile haptic effect in response to a haptic signal from the processor. The vibrotactile haptic effect can be utilized in conjunction with surface-based haptic effects and/or for other purposes.

In some embodiments, either or both actuators 418-1 and 418-2 can comprise an actuator other than a piezoelectric actuator. Additionally, a single actuator 422 is shown, although multiple other actuators can be coupled to the housing of device 401 and/or other actuators 422 may be coupled elsewhere. Device 401 may feature multiple actuators 418-1 / 418-2 coupled to the touch surface at different locations, as well.

Turning back to Figure 4A, a graphical user interface is shown at 420 to include a generalized feature 430. In this example, a haptic effect is selected for output based on the position of a touch represented by movement of finger 426 downward to position 428. Particularly, as can be seen in Figure 4B, actuators 418-1, 418-2, and/or 422 are provided with appropriate haptic signals to provide surface-based haptic feedback as indicated at 432, 434, and 436. The different cross-hatching is intended to represent different "feel" of the touch surface due to the actuators. For instance, 432, 434, and 436 can represent variations in the texture or coefficient of friction of the touch surface that generate the desired haptic effect. In one embodiment, the feeling of a box can be simulated by having a first area 432 of higher friction followed by a second area 434 of lower friction and a third area 436 of higher friction.

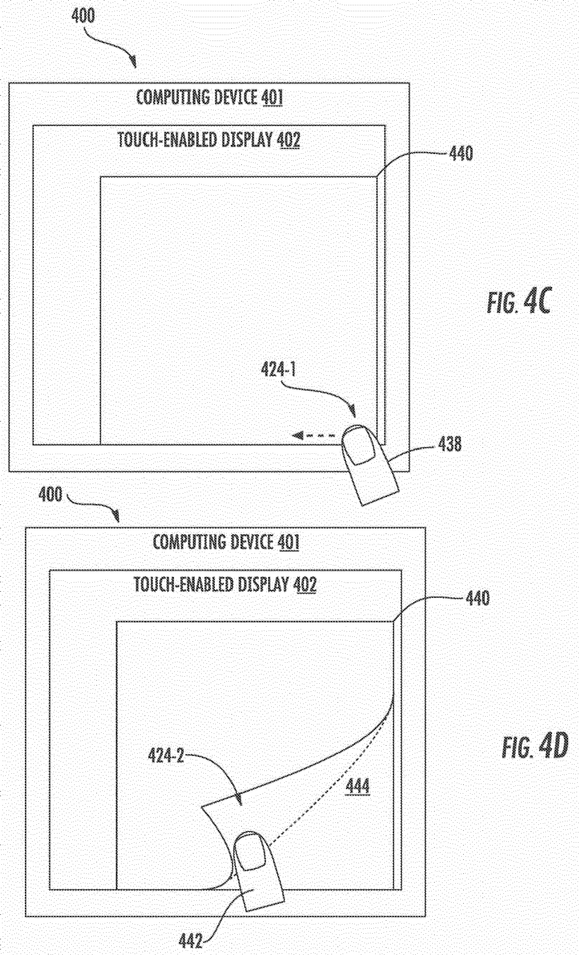

Figures 4C-4D provides an example of a graphical user interface 424 as the processor is configured to select a haptic effect in response to recognizing a page turn input gesture, with the haptic effect selected to vary the touch surface in the direction of the page turn input gesture as the gesture is provided. Figure 4C shows a first interface state 424-1 in which a finger 438 touches an onscreen representation of a stack of pages 440.

As shown at 442 in Figure 4D, the finger has provided a right-to-left input gesture. In this example, software of computing device 401 configures the processor to recognize a right-to-left trajectory beginning from a page corner as a page turn input gesture. Thus, the interface moves to state 424-2 where the page corner is lifted and the next page is visible at 444. Additionally, as the gesture is in progress (and/or after the gesture is recognized), a surface-based haptic effect can be provided. For example, as finger 438 moves from right to left, the coefficient of friction of the touch surface can be varied (e.g., by increasing) to simulate the feel of a page turn. As another example, a series of friction changes can be provided, or one or more texture changes may occur.

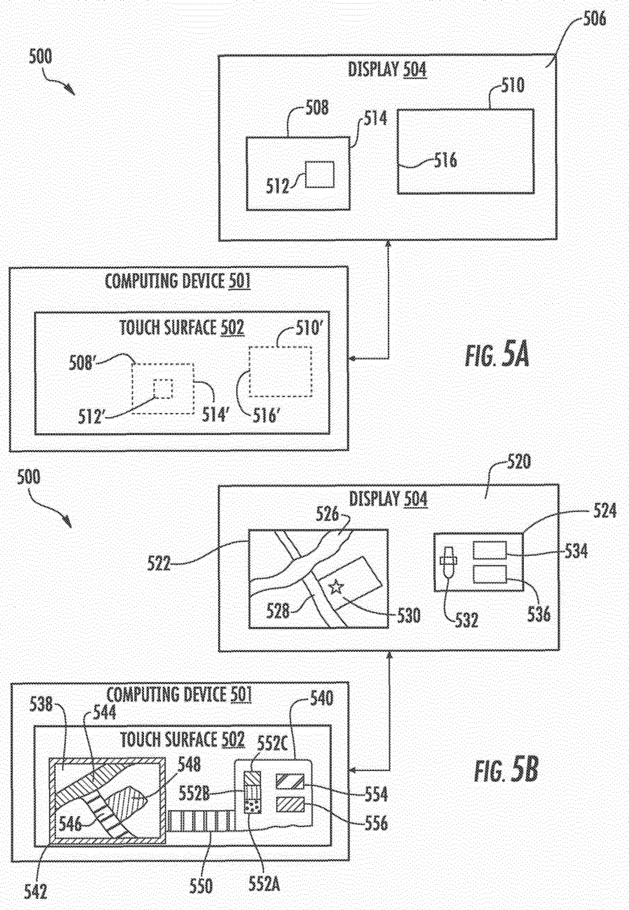

Figures 5A-5B each illustrate a system 500 comprising a computing device 501 featuring a touch surface 502. Computing device 501 can be configured similarly to devices 401 and 101 of Figures 4 and 1. In these examples, touch surface 502 is separate from a display that features a graphical user interface mapped to the touch area. A separate display 504 is shown in Figures 5A-5B and interfaced to device 501.

For example, device 501 may represent a computing device interfaced to display 504, such as a laptop computer with a built-in trackpad corresponding to the touch surface. As another example, computing device 501 may itself be a peripheral device including the touch surface 502, actuators, and suitable processing circuitry commanded by a computing device to which device 501 is interfaced. In any event, it will be understood that the principles discussed in Figures 5A-5B are equally applicable to embodiments in which the touch surface corresponds to the display or a material above the display. Additionally, the principles can, of course, be used when a touch surface is separate from a display (e.g., a touch surface on a mouse, computer trackpad, etc.).

Turning to Figure 5A, in this example the processor of device 501 is configured to select a haptic effect in response to recognizing a gesture indicating movement of an on-screen content item from a first location to a second location. Graphical user interface 506 includes windows 508 and 510. Element 512 may represent a file, folder, or other element that can be manipulated on screen. These elements are each mapped to respective locations shown at 508', 510', and 512' in the touch area as defined by touch surface 502. A user may position a finger or other object at or near 512' and touch surface 502. This input can be recognized as selection of item 512. Area 512' may have a distinct texture or other haptic effect associated with the content or identity of item 512 in some embodiments.

To move item 512 to window 510, the user may drag across touch surface 502 across borders 514' and 516', corresponding to borders of windows 508 and 510 in interface 506. If the second location (window 510 in this example) corresponds to a protected area (e.g., a system or other secured folder), an appropriate surface-based haptic effect may be provided as border 516' is approached or crossed. As another example, if element 512 represents a protected file, haptic effects may be provided at or near border 514'. For instance, the coefficient of friction may be increased significantly to discourage movement out of window 508 and/or into window 510. As another example, the status of element 512 may be indicated by a particular texture at area 512' or a particularly high coefficient of friction when a movement begins from area 512' as compared to movement of other, non-protected elements (not shown).

Figure 5B illustrates an example where the processor is configured to select a haptic effect based on a control displayed in the graphical user interface at a location mapped to a position in the touch area at or near the position of the touch. Additionally, haptic effects based on additional content are shown.

Particularly, graphical user interface 520 includes a first portion 522 displaying content and a second portion 524 featuring on-screen controls. In this example, content portion 522 features a map with a major road 526, minor road 528, and a destination 530. Control portion 524 includes a slider 532 and buttons 534 and 536. Any suitable graphical control elements can be used, including, but not limited to, checkboxes, radio buttons, drop-down menus, accordion menus, dials, and the like.

Graphical user interface 520 is mapped to the area of touch surface 502. In this example, touch surface 502 is illustrated to provide a number of surface-based haptic effects. Although illustrated simultaneously, it will be understood that the various haptic effects indicated by cross-hatching will be provided by device 501 as a touch is at or near the area containing the effect.

As shown at 538, the portion of the touch area mapped to content portion 522 features a border 538. The border may comprise a texture or friction variation to help indicate the boundaries of the portion mapped to content portion 522. Additionally, surface effects are provided at 544 and 546 to identify major road 526 and minor road 528.

For example, different types of road and other map features may have distinct textures or friction levels. As another example, an on-screen route may be displayed in content portion 522. Portions of touch surface 502 mapped to the route may have a different friction or texture than portions corresponding to roads off of the route. For example, a user may be able to trace the route by following low-friction portions 544 and 546, with friction increasing past location 548. Location 548, as the intended destination, may have a unique friction or texture.

Touch surface 502 features a portion 550 representing a haptic effect that may serve to guide a user toward a portion of the touch area mapped to control portion 524. For example, portion 550 may feature a lower coefficient of friction to allow an easy path to the controls.

As shown at 552A, 552B, and 552C, different haptic effects are provided as the value of slider 532 increases. For example, the friction level may change as the slider is moved upward or downward. As another example, buttons 534 and 536 may feature distinct border areas signified by different textures or simulated by friction variances. In some embodiments, the texture or friction of buttons 534 and 536 varies based on a value or state of the button. Haptic effects in addition to texture and/or friction can be provided as well. For example, as a user moves into/from a button, a haptic pop or vibration may be provided.

### Other Illustrative Embodiments of Surface-Based Effects

The examples above were provided for purposes of illustration and are not intended to be limiting. Additional examples of surface-based haptic effects are discussed below.

In some embodiments, surface-based effects are provided independently of a mapping to a graphical user interface. For example, a touch surface may be used to provide inputs to manipulate graphical elements in a three-dimensional environment presented in the graphical user interface. Different textures may be provided to indicate different controls or motions-for example a first texture (or friction) along the x axis in the touch surface may indicate translation in an x-y plane in the 3-D environment, while a second texture (or friction) along the x-axis may indicate translation in an x-z plane of the 3-D environment. As another example, manipulation of an object in the 3-D environment may be indicated by varying textures or friction along multiple contact points of the touch surface.

As a further example, different textures can be used to indicate different type of control actions. For example, in a computer aided design (CAD) or 3-D environment, a first texture may be provided when moving an element or object in the environment, while a second texture is provided when the view is changed but the element/object is not moved.

Still further, embodiments include changes in texture associated with drawing or other input. For example, in a design application, different brushes or other tools can have corresponding textures. As a brush size is changed, the brush size may be "felt" by providing a different texture with each brush size and/or by mapping the brush texture to a larger portion of the touch area.

Embodiments include the use of texture, friction, and/or other haptic effects in accordance with the present subject matter in order to indicate the contents of a file or document. For example, a user interface may include a timeline selection mechanism (e.g., a slider) that includes surface-based haptic effects. For instance, an audio file may be analyzed for one or more characteristics (e.g., volume) and surface-based haptic effects mapped to the characteristics (e.g., different textures, friction levels, etc. for different volumes). As the user interacts with the selection mechanism, different haptic effects can be provided (e.g., the slider feels different when portions of increased volume are encountered).

As another example, surface-based haptic effects may be used in conjunction with games. For example, U.S. Patent Application Publication No. 2008/0064499, which is incorporated by reference herein in its entirety, describes the use of haptic effects with casino and other games. Surface-based haptic effects may be used in addition to or instead of effects described therein, such as different frictions/textures when playing cards, game instruments (e.g., roulette wheel, dice, etc.) are interacted with via the touch surface and/or to indicate results or game rules (e.g., different texture when a user advances, different friction values used to indicate when a prohibited move is made in a game, etc.).

### General Considerations

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, a haptic effect selection routine, and suitable programming to produce signals to generate the selected haptic effects as noted above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art. In particular, the invention is compatible with the following features:

### Features List

1. A system comprising:
   a sensor configured to detect a touch in a touch area when an object contacts a touch surface, the touch area mapped to a display area of a graphical user interface;
   an actuator in communication with the processor and coupled to the touch surface, the actuator configured to output a haptic effect in response to a haptic signal; and
   a processor in communication with actuator and sensor, the processor configured to:
      select a haptic effect to generate based on identifying a position of the touch and at least one of (a) recognizing an input gesture provided by the touch or (b) content displayed in the graphical user interface at a location in the display area mapped to a position in the touch area at or near the touch, and transmit a haptic signal to the actuator to generate the selected haptic effect while the touch is occurring to provide at least one of a texture, a simulated obstacle or boundary, or an adjusted coefficient of friction of the display.
2. The system set forth in feature 1, wherein the actuator comprises a piezoelectric actuator.
3. The system set forth in feature 1, wherein the haptic effect is generated by varying a coefficient of friction of the touch surface.
4. The system set forth in feature 1, wherein the haptic effect comprises simulating a texture on the touch surface.
5. The system set forth in feature 1, wherein the processor is configured to select a haptic effect based on the content of text displayed in the display area at a location mapped to a position in the touch area at or near the position of the touch.
6. The system set forth in feature 1, wherein the processor is configured to highlight content displayed in the graphical user interface in response to a search query, and wherein the haptic effect is selected to generate a haptic effect at a position in the touch area mapped to a position in the display area at or near the highlighted content.
7. The system set forth in feature 1, wherein the processor is configured to select a haptic effect based on a control displayed in the graphical user interface at a location mapped to a position in the touch area at or near the position of the touch
8. The system set forth in feature 1, wherein the processor is configured to select a haptic effect in response to recognizing a page turn input gesture, the haptic effect selected to vary the friction or texture in the direction of the page turn input gesture as the gesture is provided.
9. The system set forth in feature 1, wherein the processor is configured to select a haptic effect in response to recognizing a gesture indicating movement of an on-screen content item from a first location to a second location.
10. The system set forth in feature 1, further comprising a display, the display comprising a plurality of pixels and defining the display area, the display configured to output an image based at least in part on a display signal,
   wherein the touch surface corresponds to the display or a material above the display, and
   wherein the processor is configured to output the display signal.
11. The system set forth in feature 1, further comprising a second actuator configured to provide a haptic effect in response to a haptic signal from the processor.
12. A method, comprising:
   tracking a location of a touch on a touch surface, the location tracked relative to a touch area mapped to a graphical user interface;
   based on the location of the touch, identifying an interaction with the graphical user interface;
   selecting a haptic effect to generate based on the interaction; and
   commanding at least one actuator to generate the selected haptic effect, the haptic effect comprising at least one of a texture, a simulated obstacle or boundary, or an adjustment of a coefficient of friction of the surface.
13. The method set forth in feature 12, wherein the haptic effect is generated at least in part by varying a coefficient of friction of the touch surface.
14. The method set forth in feature 12, wherein the interaction comprises adjusting an on-screen control and the haptic effect is selected based on a value of the on-screen control.
15. The method set forth in feature 12, wherein the interaction comprises touching the surface at or near a location mapped to a portion of the graphical user interface containing a feature, the feature associated with the haptic effect.
16. The method set forth in feature 15, wherein the feature comprises a textual or graphic element in the interface highlighted in response to a search command.
17. The method set forth in feature 15, wherein the feature comprises graphical or textual content.
18. The method set forth in feature 15, wherein the feature comprises a boundary in the graphical user interface.
19. The method set forth in feature 12, wherein the interaction comprises an input gesture.
20. The method set forth in feature 19, wherein the haptic effect is provided during the input gesture.
21. The method set forth in feature 19, wherein the haptic effect is provided after the input gesture.
22. A tangible computer-readable medium embodying program code executable by a computing system, the program code comprising:
   program code for causing the computing system to track a location of a touch on a touch surface, the location tracked relative to a touch area mapped to a graphical user interface;
   program code for causing the computing system to identify, based on the location of the touch, an interaction with the graphical user interface;
   program code for causing the computing system to select a haptic effect to generate based on the interaction; and
   program code for causing the computing system to transmit a haptic signal to at least one actuator to generate the selected haptic effect by varying a coefficient of friction of the touch surface.

## Claims

1. A method, comprising:
identifying text displayed in a display area (130, 504) associated with a touch surface (116, 402, 502) responsive to a search query;
highlighting the identified text displayed in the display area;
determining (312) a haptic effect to generate based on identifying a position of a touch and the highlighted identified text, wherein the haptic effect is configured to adjust a coefficient of friction of the touch surface; and
outputting (308, 310) a haptic signal associated with the haptic effect to a haptic output device, the haptic output device (118, 418-1, 418-2, 422) configured to output the haptic effect while the touch is occurring.

2. The method of claim 1, wherein the haptic output device (118, 418-1, 418-2, 422) comprises one or more of: an ultrasonic actuator or an electrostatic actuator.

3. The method of claim 1, further comprising determining (312) the haptic effect based on a control displayed in a graphical user interface at a location mapped to a position in the touch surface at or near the position of the touch.

4. The method of claim 1, further comprising determining (312) the haptic effect in response to recognizing a page turn input gesture, the haptic effect determined to vary the coefficient of friction in a direction of the page turn input gesture as the gesture is provided.

5. The method of claim 1, further comprising determining (312) the haptic effect in response to recognizing a gesture indicating movement of an on-screen content item from a first location to a second location.

6. The method of claim 1, wherein selecting (312) a haptic effect to generate further comprises determining a haptic value associated with one or more pixels at the position of the touch.

7. The method set forth in claim 1, wherein the touch comprises adjusting an on-screen control and the haptic effect is selected based on a value of the on-screen control.

8. The method of claim 1, wherein an adjustment of the coefficient of friction of the touch surface (116, 402, 502) comprises increasing the coefficient of friction of the touch surface.

9. A system comprising:
a touch surface (116, 402, 502);
a display area (130, 504) associated with the touch surface;
a haptic output device (118, 418-1, 418-2, 422); and
a processor (102) in communication with a haptic output device, configured to:
put into effect the method of any preceding claim.

10. A non-transitory computer-readable medium (104) embodying program code, which when executed by a processor (102) is configured to cause the processor to put into effect the method of any of claims 1-8.
